# EUROPEAN PATENT APPLICATION

(11) **EP 2 230 635 A1**
(43) Date of publication of application: **22.09.2010**
(21) Application number: 09004002.3
(22) Date of filing: 20.03.2009
(51) Int. Cl.: G06Q 10/00

(54) **Coordinating interaction in distributed unlike environments**

(71) Applicant: EADS Deutschland GmbH, 85521 Ottobrunn (DE)
(72) Inventor: Hoche, Michael, Dr., 88090 Immenstaad (DE)
(74) Representative: Meel, Thomas

(57) **Abstract**

The invention relates to a method for coordinating interaction in a set of distributed fluctuating environments, where an environment comprises objects and resources, the method comprising capturing interactions, evaluating captured interactions inside an environment and controlling said objects and resources inside the environment, and exchange information about the objects and resources, whereas activity descriptions are derived from the interactions that describe transitions of an environment, the activity descriptions are exchanged between the environments, and coordinating the environments by synchronizing objects and resources that are related to activities as a cooperative environment.

## Description

This invention concerns a method for coordinating interactions in a set of distributed fluctuating environments like a network-centric Environment and a system for coordinating such environments. Especially the invention provides a method for identifying relevant objects in a network centric environment.

Network-centric operations are a new military doctrine or theory of war. Network centric operations seeks to translate an information advantage, enabled in part by information technology, into a competitive war fighting advantage through the robust networking of well informed geographically dispersed forces. This networking combined with changes in technology, organization, processes, and people may allow new forms of organizational behaviorlnformation sharing enhances the quality of information and shared situational awareness. Shared situational awareness enables collaboration and self-synchronization, and enhances sustainability and speed of command. These in turn, dramatically increase mission effectiveness.

Network centric warfare in the military domain is very similar to enterprise application integration using workflow techniques in the civil domain. Enterprise application integration introduces the concept of a system of systems by means of service oriented architecture, see http://en.wikipedia.org/wiki/Service-oriented architecture. It is an evolution e.g. in the military domain, of the hard wired interfacing and combination of separate sensors systems, command and control systems, and effectors that enables e.g. enhanced situational awareness, rapid target assessment, and distributed weapon assignment even in a very obscure and unknown environment.

Improved situation awareness is a key concern, promising to deliver strategic advantages in a variety of general collaboration scenarios. Improved situation awareness can benefit operational effectiveness by facilitating the planning process, improving the quality and timeliness of decisions, and providing better response regarding the immediate and the strategic consequences of any actions.

It is known that realizing situation awareness could be reached by capturing a context. Context originated as a term from computer science is sought to deal with linking changes in the environment, which are otherwise static. Although it originated as a computer science term, it is applied to business process management issues. It follows the idea that the system can sense and react based on the environment context. This means a flexible reactivity using process and workflow design which have been proved successful in context-aware pervasive, ubiquitous systems.

The need for improved situation awareness is particularly important when one considers the increasingly sophisticated technological backdrop. The advent of network-enabled capabilities and the growth of the Internet as a medium for information dissemination afford great opportunities for situation awareness, but it also presents some relatively new and distinct challenges.

One major challenge relates to the need to distinguish relevant information from background noise. Another relates to the need to carefully filter incoming information streams based on the knowledge and information requirements of different information consumers.

Further worries relate to the rate of information dissemination in today's media-intensive environment. The concern here is that the dynamics of the information and situation picture may result in the differential prioritization of problem-solving goals. When goal switching is mandated by changing operational commitments then different subsets of information will need to be dynamically integrated or aggregated to support changing situation awareness concerns.

Therefore the definition of a "common relevant operational picture" (CROP) as a single identical display of relevant operational information, e.g. position of own troops and enemy troops, position and status of important infrastructure such as bridges, roads, etc. shared by more than one command was established. A standard common operational picture facilitates collaborative planning of operations and assists all echelons to achieve situational awareness.

There are efforts like the Multilateral Interoperability Program (MIP) to assure the capability for interoperability of information to support combined joint operations. The NATO Data Administration Group cooperates with the MIP's Data Modeling Working Group in building exchange standards like the Joint Command, Control and Consultation Information Exchange Data Model (JC3IEDM) or the Command and Control Information Exchange Data Model (JC2IEDM). And the standard for Information exchange should enable coordinating interactions, see http://www.mip-site.org/.

The currently used approaches to establish common operational picture make either use of a shared repository, sharing the same standardized scheme, as MIP does, or using a standardized process description.

One major standard for the interoperability of workflow management systems is provided by the Workflow Management Coalition (WfMC), see http://www.wfmc.org/. Its focus is principally around process definition file interchange, using the standard Extensible Markup Language (XML) Process Definition Language (XPDL). The other WfMC-created standard in use today is Workflow XML (Wf-XML). In contrast to the Open Architecture System Integration Strategy (OASIS) Web Services Business Process Execution Language (BPEL), XPDL is not a compiled executable programming language, but a process design format for storing visual diagram and process syntax of business process models.

Applying process descriptions implies that one has to know at development stage which workflows are executed.

For integrating two environments usually enterprise information techniques, see http://en.wikipedia.org/wiki/Enterprise Information Integration are applied to reach a consensus for the format, representation, meaning, and exchange of data.

For reaching a system of systems currently the state of the art comprises a set of enterprise application integration techniques, see
http://en.wikipedia.org/wiki/Enterprise Application Integration.

These techniques all share that each environment covers a certain process. These process descriptions, e.g. as a workflow description, is used to identify a meaningful interoperation in a common workflow that is derived at development time which is finally mapped into an execution.

A concrete example could be the integration of two sensor system applications and a weapon assignment application. Suppose the first sensor system application delivers the position of a detected target together with a target classification in a first format. The second sensor application delivers the position of a detected target, only, without classification, in a second format. The weapon assignment application required position of a target in a third format and a confirmation of the target position to assign a weapon. Suppose further the process of the first sensor is a continuous scan producing a stream of data in the first format. The process of the second sensor is directive, i.e. the sensor requires a designation and then it produces a stream of data in the second format.

According to prior art there are two feasible application integrations: The first is a share data store gathering all data from both sensors in an agreed unifying format with a unique semantic and a trigger for the weapon assignment application when there is an item in the store fulfilling the requirement of a identification and a position of a target and a confirmation of the target position. Then the weapon assignment application will assign a weapon. The designation of the second sensor is derived by a process that is triggered by data originated by the first sensor.

A second integration is to define a business process where in an initial task the first sensor application is used to detect a target. If a target is detected its position is converted to designate the second sensor. And, if the position is confirmed, the weapon assignment application is executed to assign a weapon of the identified target with the confirmed position.

One can observe two things from this simple example. Either one needs a world knowledge space which is the store in the first example or one has a predefined procedure guiding the process execution in the second example.

As soon as the environment will become more complex, e.g. by more sensors, more classification criteria, more execution aspects, more weapon assignment, etc. it becomes infeasible to design an optimal workflow or an optimal store.

Both methods lack on synchronization of usually occurring complex ad hoc activities. That is the demand in today's multi-propose environments that everyone knows. Usually, there are multi purpose applications like sensors which can detect any object in their sensing range, e-mail clients which can receive messages about any topic, editors that are suitable to write descriptive data like text about anything etc. The application often do dot care about content. The remaining problem is to coordinate the results that do not necessarily share structural properties, such that the intended activities of invoked users are coordinated to reach a common goal.

According to the invention, this problem is solved by a method for coordinating interaction in a set of distributed fluctuating environments. An environment comprises capture means for capturing interaction, where an interaction is evaluated inside an environment. The environments exchange information derived from said interactions, in such a way that activity descriptions are derived from the interaction that describes transitions of or inside an environment. These activity descriptions are exchanged between the environments, the activity descriptions are presented, and the activity descriptions are used to coordinate environments by considering and synchronizing related activities in cooperative environments.

It is noted that related activities become then transparent and observable.

Preferably the activity descriptions comprise an environment description that is used to coordinate environments and preferably the activity descriptions are generated during execution or before execution in a kind of dry run. The essential feature is that interaction is captured and extensionally presented and not only intentionally.

This enables to analyze activity descriptions in order to identify activity templates by matching or unifying them. This enables also to tie objects on the fly together that span an activity context

Activity descriptions can be used to explore reactive behavior of the environment by simulation of invoked resources. An actor can explore by trying out and confirm the try or if the try is not successive or prospective, the actor can retract the interaction. That means that activity descriptions can be used to cancel interactions and restore parts of environments that were invoked by the activity.

When items that are not under control of an environment are simulated then activity descriptions can be used to agile plan suitable activities or interactions. The system of environments as a whole would reply with a simulated situation. Preferably suitable activities or interactions are stimulated or executed automatically.

Activity descriptions can be used to discriminate relevant objects or object interrelations.

Preferably, activity descriptions are presented uniformly in the environments which required a new set of interaction and presentation metaphors. Preferably the relevance of an object determines the object's presentation and the object's interactions.

Moreover preferably activity descriptions are used to control the establishment of inter-communication or to determine a common view of inter-communication objects.

In the following a simple exemplary process Meta model is introduced which is derived from the Software Process Engineering Meta-Model, see http://www.omq.org/technology/documents/formal/spem.htm, in order to distinguish the invention from the prior art.

Process model allow declaring a process as a complete and integrated approach for performing a specific job. Usually such a model comprises atemporal methodological parts (Who, What, Why, How) as highly re-useable information like for example the definition of roles, tasks, work products, and their associated relationships.

A process has also temporal parts (When) for example end-end sequence of phases, iterations, performance of tasks, and milestones that define a life cycle or a workflow, i.e. the arrangement in time of the atemporal parts. In the following an exemplary process Meta model is developed to differentiate activities from process execution.

Let work products, i.e. artifacts, represent the tangible things used, modified, or produced by a task. Roles use work products to perform tasks and produce work products in the course of performing tasks. Work products are the responsibility of a role. There might be several types of work products like an artifact, i.e. managed item, a deliverable, requested by some role, or an outcome, i.e. an intangible result of a task to enumerate a few.

Let a task be an assignable unit of work. Tasks are performed by roles. Tasks have a clear purpose, and comprise a performable step-by-step description of the work that needs to be done to achieve a goal. Tasks modify or produce work products but tasks itself do not define when they are performed.

A performance of a task represents a general unit of work assignable to specific performers, i.e. a role instances. A performance of a task can rely on input and produces outputs or might also represent a grouping element.

A work sequence is a breakdown element that represents a relationship between two performances of a task in which one depends on the start and the finish of others. A work sequence determines an execution order.

Most real processes comprise complex activities being too variable to be automated by means of a finite description like predefined workflow that denotes a work sequence. Activities cut across boundaries like business functions; the assembling of different teams; people switch roles and move on and off teams; coordination, tracking, and decision making. This is mainly due to a misunderstanding of the notion role.

Roles in the above sense define a set of related skills in a context like competencies and responsibilities. Roles are not individuals. People, i.e. individuals might play multiple roles and they even might switch roles. Roles perform tasks, and roles are responsible for work products. Thus, a role becomes a set of connected behaviors, rights, and obligations performed by people in a social situation, i.e. in the real workflow execution.

In contrast, the term role is mostly defined as an expected behavior in a given individual social status and social position. The term role is used in two rather different but related senses. It is vital to both functionalist and interactions understandings. The functionalist approach sees a role as the set of expectations that are placed on an individual. By unspoken consensus, certain behaviors are deemed appropriate and others inappropriate. Roles can be semi-permanent, or they can be transitory. In the functionalist conception, role is one way in which individual activity is socially regulated: roles create regular patterns of behavior and thus a measure of predictability, which not only allow individuals to function effectively because they know what to expect of others, but also make it possible to make generalizations about society. Collectively, a group of interlocking roles creates a social institution. In interactions social theory, the idea of role is crucial. The interactions definition of the term role predates the functionalist one, but is more fluid and subtle. A role, in this conception, is not fixed or prescribed but something that is constantly negotiated between individuals in a tentative, creative way. Novices e.g. imitate the roles of the people around them and try them on to see how well they fit and finally they will adapt on an experts behavior.

This is always done in an interactive way: it's not meaningful to think of a role for one person alone, only for that person as an individual who is both cooperating and competing with others. Every person behaves similarly by taking roles from those that are seen around them, adapting them in creative ways, and (by social interaction) testing them and either confirming them or modifying them. Automated business processes thus require spontaneous adaptability although it does not serve. This spontaneous behavior is captured as the activity.

While e-business can enhance business processes, business information exchange, and even pre-defined workflows, the people themselves conduct the non-routine, value-added cognitively creative work that often cannot be automated. Most knowledge work is collaborative, informal, and situational adaptive. Thus people request for and use flexible technologies, such as document editing tools, email, chat, phone, and shared repositories that are not well integrated with formal processes.

To reach a common relevant operational picture it remains to capture the philosophical insight of a role interaction into a technical solution of a network centric environment. Some of the challenges to situation awareness can be addressed by a combination of semantic technologies and advanced modes of information visualization and user interaction.

Exemplary three domains are assumed: A physical domain, where events take place that are perceived by sensors or individuals. Data emerging from the physical domain is transmitted through an information domain. Data is subsequently received and processed by a cognitive domain, where it is assessed and acted upon.

A global information grid will become a primary technical framework to support information exchange. Grid is according to
http://en.wikipedia.org/wiki/Grid computing, a form of distributed computing whereby a virtual computer is composed of a cluster of networked, loosely-coupled computers, acting in concert to perform very large tasks. This technology has been applied to computationally-intensive problems, and it is used in commercial enterprises for such diverse applications in support of e-commerce and web services.

What distinguishes grid computing from typical cluster computing systems is that software in grids is more loosely coupled, heterogeneous, and geographically dispersed.

Under this directive in the military domain, all advanced weapons platforms, sensor systems, and command and control centers are eventually to be linked. This grid is much like the Internet, i.e. a distributed storage, information assurance (security), collaboration, messaging, mediation, service management, a medium for node to client connectivity, etc.

The technical final goal is a net-centric enterprise solution for interoperability. There is significant need to harmonize the technical and operational aspects of net-centric operations among multiple systems, to support interactions.

As exemplary illustrated this goal is not reachable by predefining variants of workflow when the execution underlies a higher uncertainty and variance. Current command and control systems provide definable workflows for repetitive procedures but when dealing with unexpected behavior, the operational context of a pre-defined workflow is left and replaced by a toolset of supporting applications: calendars, e-mail threads, audio conferencing, etc.

To reach this goal of interoperability, i.e. to enable coordination of spontaneous interactions in a set of fluctuating environments a conceptual framework of unified activities needs to be developed.

The claimed solution has the advantage and the hypothesis is that a platform for explicitly representing activities as personal, operational, and social structures will provide benefits, from productivity and coordination to organizational learning and adaptation.

Because the approach is rather dynamic it is configurable and hence widely reusable. This means implemented functionality dealing with activities is per se generic and can be re-used in multiple applications.

It is further mentioned that the approach enables to capture a notion of relevance that is bound to an activity. The solution extends naturally and canonically to interactive exploration and simulation. And this is important if one intends to integrate large scale systems since than one needs to have simulation components independent from the integration in order to minimize integration effort. This is fulfilled since the simulation is an artificial activity history and need not to be realized inside an integrated or involved system.

For a user the claimed method allows process improvement through experience and information sharing between persons that performed similar activities i.e. that played similar roles and this without knowing their roles.

A simple example that illustrates this advantage is a person that seeks for a book on analysis, say the total variation concept, because this person looks for an optimization. Suppose further the person finds the text of Boris I. Golubov, http://eom.springer.de/V/v096110.htm. As soon as a second person is confronted with an optimization problem, the second person need not to re-perform the search; it suffices to be linked with the result, because of the similarity between the activities.

This shows a further advantage: role inference enables dynamic coordination and optimized resource dispatching, where the advantages are based on the explicit generic shared operational semantics enabling interoperation. It is important to realize that the second person is categorized by the real behavior and not by some predefined axioms. Formalizing the behavior allows to conclude about the intention and to recommend successful behavior.

Explicit action semantics spans a variety of domains like interruption management, agile improvement, and social computing, creating a new generation of collaboration.

The objects of the invention are described out in the following by comparing the traditionally applied technologies and the methods according to the invention, and how their application will result in a computer software product according to the invention. These and many other objects and advantages of the present invention will become apparent to those of ordinary skill in the art from a consideration of the drawings and ensuing description, where
- Fig. 1: shows layers as applicable for business application integration according to prior art.
- Fig. 2: shows an exemplary business process Meta model,
- Fig. 3 and 4: show the standard method and the resulting architecture when transforming a process description into a process execution according to prior art,
- Fig. 5: shows the an unfolding of a process execution according to prior art,
- Fig. 6: shows the activities of an unfolding of a prior art process execution according to the invention,
- Fig. 7: shows activities of an execution according to the method according to the invention with emphasized dynamic temporal dependencies,
- Fig. 8: shows activities of an execution according to the method according to the invention with emphasized relevant objects, dependencies, and extensions,

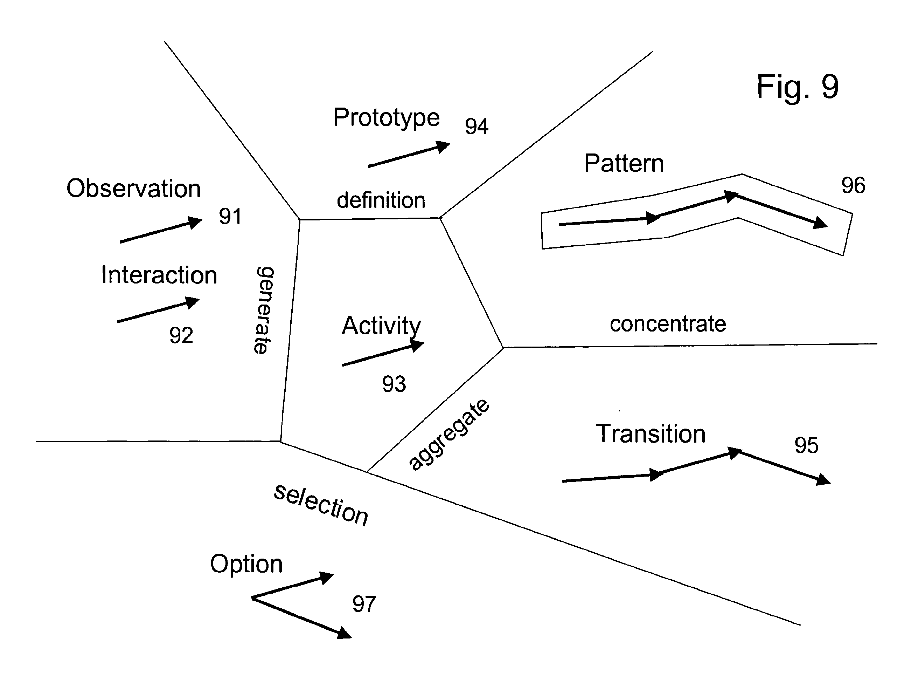

- Fig. 9: shows several aspects of an activity applicable to the method according to the invention,
- Fig. 10: shows activities of an execution according to the method according to the invention with emphasized coordination,
- Fig. 11: shows activities of an execution according to the method according to the invention with emphasized exploration.

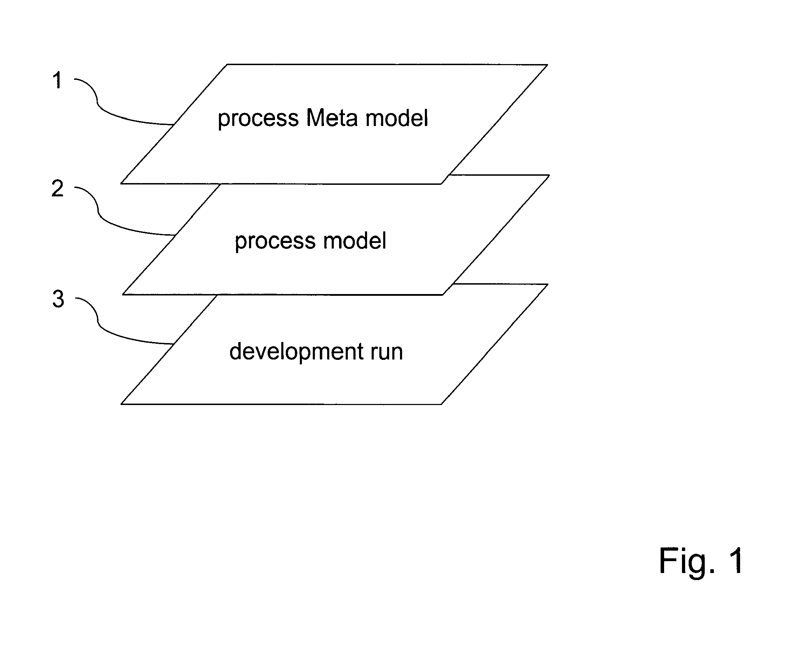

Fig. 1 shows layers of a business application integration according to prior art. Some applications being executed on two hosts are assumed. Both have their initial states and their transients bringing them from one state to another. Suppose in advance the applications communicate by means of an agreed interchange format like a description language or a database, or a mere schema. Both applications have their environment and both have their actors, i.e. users, that interact with that environment and hence with the application. This assumption matches with a Web 2.0 scenario, where web browsers presenting a page are the applications, and where the web including the web servers and application servers spans the environment.

Suppose now a collaborative application like an e-auction, a web shop, or a command and control system, where several specialized applications exist that are coordinated in one workflow.

Business Process Modeling is representing both the current and future processes, so that the current process may be analyzed and improved in terms of process efficiency and quality. This is roughly a three step approach of abstraction. The first step comprises Meta modeling 1 for the analysis and construction of models applicable and useful some predefined problems and the effort of creating flexible process models. The resulting Meta process model is instantiated as a result of process modeling 2. This process is translated into development runs 3, i.e. application or device development supporting the analyzed process.

That means a process concept for identifying a process and the process interrelationship to other processes is developed which is used to optimize a process and to derive requirements and constraints on the invoked technical artifacts, i.e. the applications. The result is linked together to support an optimal process run, i.e. a workflow.

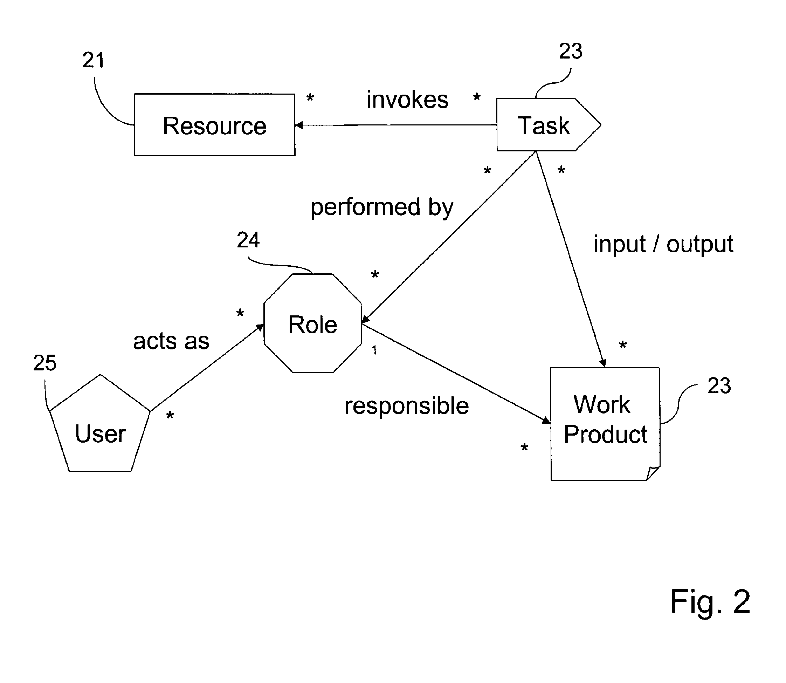

Fig. 2 shows the above described exemplary relational business process Meta model. There are resources 21 that are invoked by tasks 22. The tasks 22 have inputs and have outputs which are work products 23. Tasks 22 are performed by roles 24, and a specific role is responsible for one or many work products 23. Users 25, i.e. human actors, act as or within roles 24.

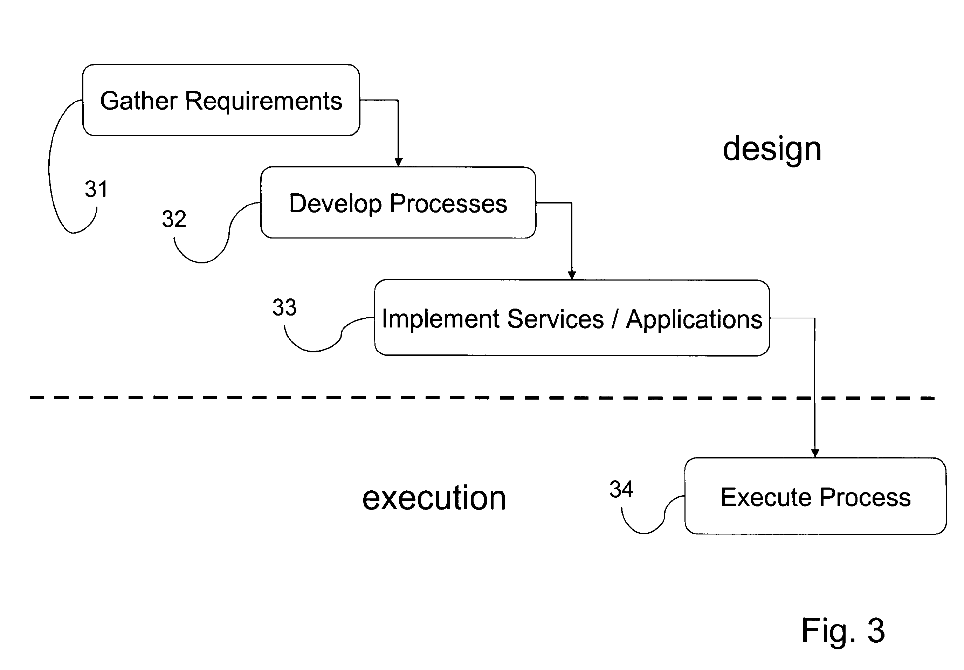

For designing a process supporting environment one has to gather requirements 31 and constraints 31, develop optimized processes 32, and implement supporting services or applications 33 at design time. When this is finished the process can be executed 34, at operating time, by simply using the designed applications in the optimized processes defined behavior. This method is depicted in Fig. 3.

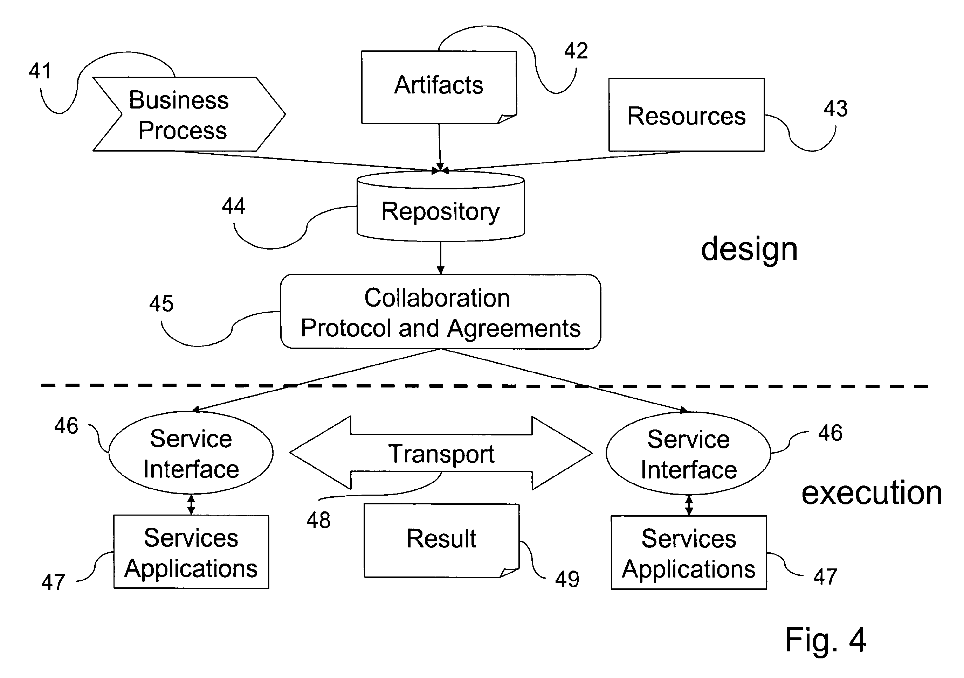

Fig. 4 shows the resulting standard architecture when following the prior art in transforming a process into a process execution. One has a repository 44 of all Meta model instances like a whole business processes 41, artifacts 42 of any kind such as working results, and resources 43 of any kind that might be invoked in an execution of a workflow. From this repository 44 collaboration agreements and applicable collaboration protocols 45 are derived that control the execution to be in line with the derived optimized processes.

The resources correspond to services or applications 47 that might be invoked via an service interface 46 while execution and the agreements and protocols control the execution and control the exchange of results 49 that are derived by a process 41 using a resource 43 by invoking a concrete service 47 via an service interface 46.

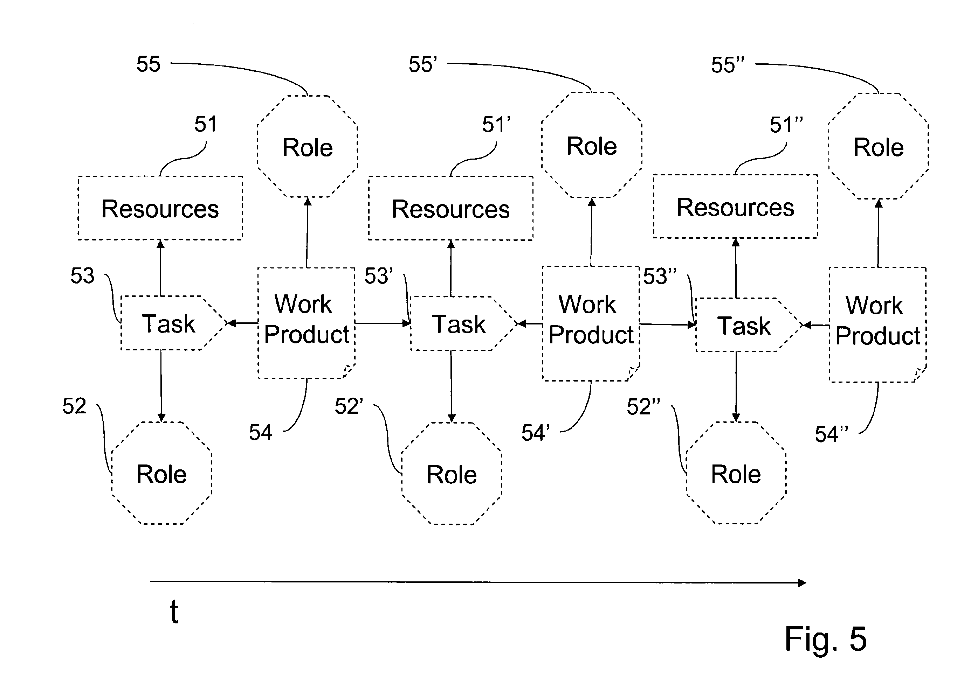

This corresponds to a predefined unfolding of the process model in time t as it is shown in Fig. 5. There, a workflow decomposed into three task instances 53, 53', 53" which is intentionally done in order to coordinate the invocation of resources 51, 51', 51" along time t inside a task context 53, 53', 53" resulting in a sequence of output work product 54, 54', 54", serving the successor task context 53', 53" as input. Each of the work products 51, 51', 51" has a responsible role 55, 55', 55" usually for enforcing the respective creating task 53, 53', 53". And the invoked users are grouped using a respective performing role context 52, 52', 52". Although the same shapes are used as in the Meta model in Fig. 2 there is a difference between a task in this figure and in the Meta model. In an execution the same task might occur twice, e.g. as an iteration. The instances of Meta model objects are drawn using dashed lines.

As soon as a user's interaction deviates from the workflow defined, the assumed global state, which is well defined by the workflow, becomes inconsistent because the construction is not designed and intended for arbitrary interaction. Implicitly a global state is enforced by updating either a state that is communicated to all applications, like a central database, or a deviate state is stored locally, e.g. as a shadow object, that contributes to a local deviate state. In other words, the well defined execution determines the reachable and thus well defined states of the system.

The alternative approach for synchronization of local states is possible if a workflow is predefined as an agreement that allows deriving synchronization requirements. This technique is for instance used in operational data stores like approached by the MIP, i.e. the controlled replication of multiple databases.

As soon as the users begin to interact extremely the deviation from a workflow is not acceptable because it is not controllable. The participating services or applications and the users lose the common track.

It is an essential observation that each application spans its context in the worst case or in the better case that each system spans its context. For instance on a personal computer it is usually not possible to compute inside a word processor application; therefore a calculator application is required; and if the operating system, in the terminology of this specification the environment, provides such functionality, then the applications have to use the corresponding API or by an extra workflow cutting out the to be computable thing, paste it into the calculator, and back pasting the result of the computation.

The problem becomes more difficult as soon as the involved objects evolve and their states interact. Then the application have to cooperate which is usually done by another application. This forces a bunch of applications spawning repeated application contexts for coordination. This is impossible and intractable in a network-centric environment. There systems require the capability to react.

In design of data models of operational stores this problem was circumvented by avoiding e.g. functional dependencies and elimination anomalies using normalization techniques. This is not applicable in a network-centric environment because the environments cannot force functional dependencies in other fluctuating environments.

The solution to the problem is a method for coordinating interaction in a set of distributed fluctuating environments explicitly. An environment usually comprises capture means for capturing interaction, e.g. the interactions of an application etc. An interaction is evaluated inside an environment, in a model view controller architecture an interaction forces a change of the model which is either completely or partially communicated to other applications. I.e. the environments exchange information derived from said interactions. An activity description is a description of an real activity. Activity descriptions capture activities as transitions of an environments and exchange of parts of these environments.. Then the activity description can be used to coordinate environments by considering and synchronizing related activities, hence forcing cooperation of involved environments.

To capture this solution some terms need to be clarified: Let an environment be the population of computational entities on a computer system that are accessible by means of computer networks as resources.

To differentiate, an application like a desktop environment refers to a style of application / user interface that is based on the desktop metaphor. A desktop environment typically consists of icons, windows, toolbars, folders, widgets, etc. Desktop environments provide interaction metaphors like drag and drop functionality. A desktop environment is an intuitive way for a user to interact with the computer using concepts which are similar to those used when interacting with the real world.

The term intrinsic denotes a characteristic of some thing which is essential and specific to that thing, and which is wholly independent of any other object, action or consequence. A characteristic which is not inherent is extrinsic.

An environment deals only with intrinsic elements although there is a trend in making intrinsic artifacts extrinsic, e.g. by a semantic desktop. A semantic desktop is a device in which individuals store all digital information like documents, multimedia and messages. These are interpreted as resources where all data is accessible and query able. Resources from a network can be stored and authored content can be shared with others. Ontologies allow the user to express personal mental models and form semantic glue interconnecting information. Applications respect this and store, read and communicate via ontologies and Semantic Web protocols. Thus, the personal information models become alienable but not the activities that are performed by a user.

Most real processes comprise complex business activities being too variable to be automated by means of the above described finite description like a finite automaton or a predefined workflow that denotes a work sequence.

Activities cut across boundaries like business functions; the assembling of different teams; people switch roles and move on and off teams; coordination, tracking, and decision making. Call the activities that really happened, a practice. There is a serious need to evolve practices to effectively reuse gathered experiences in similar situations.

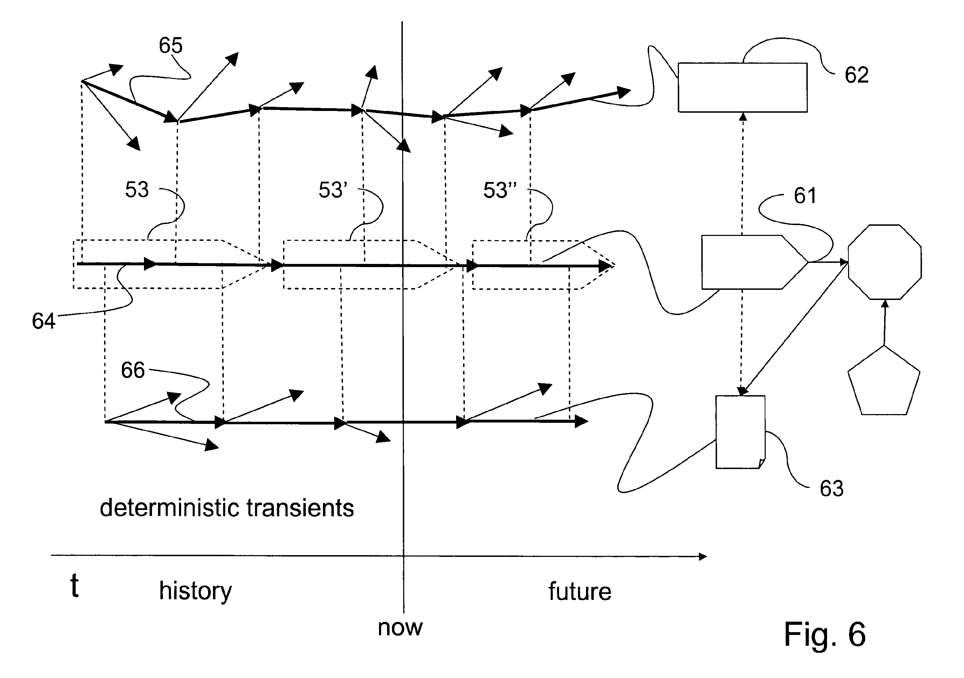

The sequence of executed task 53, 35' 53" from Fig. 5 is shown in Fig. 6, shows tasks 61 of the unfolded interactions in time t. The line of arrows attached to the task 61 corresponds to the task execution, i.e. to the invocation of resources 62 in order to derive work products 63. In the figure the same shapes are used as in Fig. 5 and in the figure showing the exemplary Meta model.

The figure shows on the left hand side the transients of the objects on the right hand side, i.e. the execution graphs, one for each of the aforementioned objects: Task 61, resource 62, and work product 63. The execution graphs visualize the evolution of an object where an arrow corresponds to an evolution alternative. The arrows correspond to an evolution increment, i.e. a transient 64, 65, 66, meaning some modification for a work product 63, an activity 65 by a user for a task 61, and a service invocation for a resource 62. Each transient begins and ends at a certain subject state. In a certain state there are sometimes alternatives, i.e. the fan out of a state might be larger than only one alternative. For the task, i.e. the sequence of activities this is by design very low meaning a user has a limited degree of freedom due to the designed workflow control.

Some kind of rather agile business processes require support that does not inhibit its informal and locally adaptive nature. The key distinction and abstraction is a generic notion of human collaborative activity, based on the hypothesis that an explicit shared representation of activity is needed, like it is shown in the figure.

An activity description articulates an actor's (person's) interaction and interactive roles involved, the resources used (tools, artifacts, other people), the results produced, the events it is bound by, and its relationships to other activities (such as part-activities or dependent activities).

All people involved should share the activity descriptions as a kind of fluent checklist and they might modify and extend the descriptions. Different people, resources, and events are associated with each of the activities and sub-activities. The people involved might alter sub-activities and add sub-sub-activities as needed to help coordinate the team's response in a specific case.

A simple realization of an activity as an object might have constructors like 'Activity.create', 'Activity.delegate', 'Activity.decompose'. Beside that an activity might have execution methods like 'Activity.invoke(object)', 'Activity.continuewith(activity)', 'Activity.continuations', etc. which describe a transition implicitly.

Any transient object as e.g. an activity could make available generically the transition path by the following methods:
'object.continue(transition)' which performes a state change of the object according to the transition, 'object.transitionAlternatives():collectionOfTransitions' returning alternative transitions that are possible in the current state, 'object.retractTransition()' that restores the state before the last transition, and 'object.currentState()' providing the current state of the object. Such an object knows its own evolution. This is an object property that is worth to berealized inside the metaobject protocol.

The dynamic relations between objects could also be realized in such a way: 'object.relate(object, relationKind)' which relates the current object with another object with respect to a kind, i.e. some formalized aspect. This contributes to the state of an object. 'object.disrelate(object, relationKind)' does simply the reverse, and 'object.relatedObject(relationKind):collectionOfobjects' returns all related objects with respect to a kind. This is about the plain old object relation which if not already available inside an object environment could also be realized inside the metaobject protocol.

For sure such arbitrary relations could also be realized by relational algebra, i.e. a relation modeling the objects and the instances, and a binary relation between the objects for any relation kind. And similarly objects or things having such properties can be modeled in ontology of sufficient expressivity.

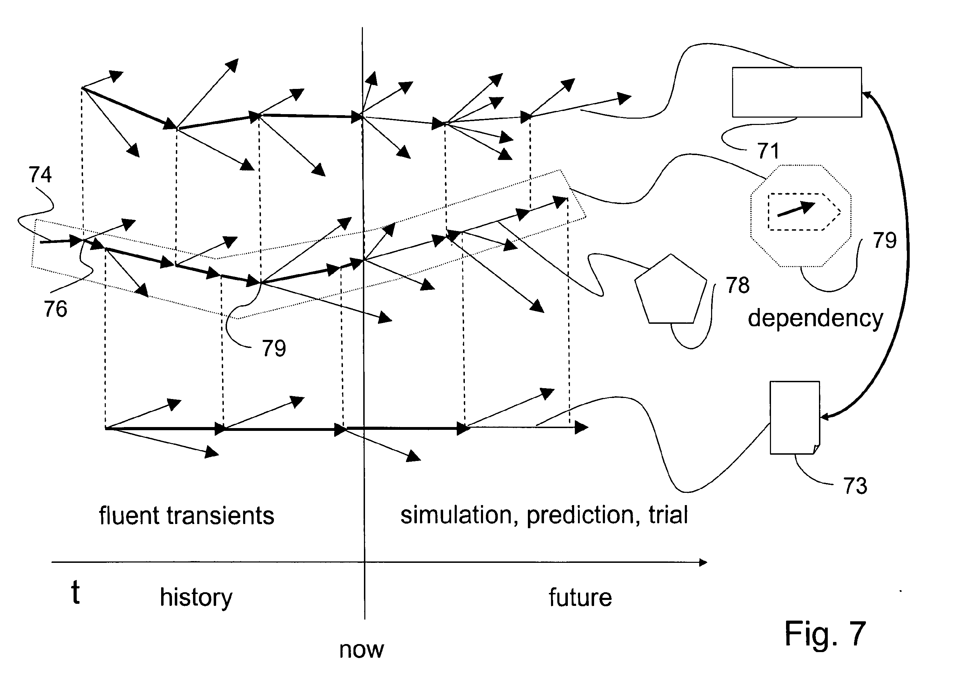

In a synchronized collaboration a shared activity representation enables to concentrate and organize adaptively work around dynamic activities instead of guiding and limiting people by redefined rather static workflows, tools, or artifacts. Fig. 7 shows such activities of an execution according to the method according to the invention with emphasized dynamic temporal dependencies.

The figure shows one resource 71, one activity transition 72 as a series of consecutive bold face arrows, and a transition of a work product 73, similar to Fig. 6. The difference is that relations that are induced by the activity transition 72 are occurring between the transients and not between the objects itself. Starting from an initial activity 74 the resource 71 is invoked which is shown by the first bold face transient of the resource path, i.e. the upper bold face arrow chain. Then the user 78 decides to continue with the activity 76 that leads to a creation of a work product 73, i.e. the imitation of a transition chain, i.e. the below graph.

Explicit transitions, i.e. activities, serves keeping track with the temporal aspect of involved objects such that a common the execution becomes transparent. It is further noted that this approach scales with respect to abstraction.

This could be realized within an object environment, a service invocation chain, and a system. And the property of serving a real Kripke like information structure ensures the solution to the problem. It is a mere design decision on which level of implementation this should be done which might be dependent on non-functional properties like performance or storage issues etc.

At a certain time t, say 'now', a user 78, some person, can decide which activity 72 he follows, by some interaction, extending the users 78 execution path, i.e. the bold face path in the middle graph. The activities induce the invocation 75 of resources 71 and causing 77 the evolution of work products 73. Thus the relationships on the transients glue together the activities, the invocation of resources and the evolution of work products. This creates transparence to a user by showing the consequences of the selection of an alternative instead of limiting the alternatives in order to control and limit a user.

The dependencies are in time and establish a relation in the Meta model instances on the right hand side. The explicit history, shown by excerpts of transition graphs for each object which allows simulating, predicting or exploring the behavior of a resource and the evolution of a work product. When a user follows a different activity the effects can be computed, and if the user accepts a resulting state, the reached states of the involved environments can be confirmed. Each transient might be simulated or predicted correspondingly which corresponds to a graph exploration of a finite directed acyclic graph.

Generically formulated passive objects could simulate their own state by a simulation of behavior attached to the object e.g. by a simulation model based on the states of the related objects 'object.relatedObject(relationKind):collectionOfobjects'. This could be realized as: 'object.simmulate():transition' which results in a simulated transition. The simulation models could be evaluated recursively. If the transition is realized in Prolog as a predicate, build-in back tracking would create the future alternatives.

The result is a state change of the whole collection of objects that predict a future state by explicit computed transitions. Interactive objects like activities could serve investigation by trial and error approaches, e.g. by graph exploration while simulating passive objects. Alternatively, means-end analysis is applicable.

For back tracking, i.e. rolling back an action the states of related objects have to be restored by propagating the rollback, recursively. That can be realized by a recursive rollback method in the above meta object notation 'object.retractTransition()' by retracting the invoked kinds 'object.relatedObject(relationKind).collectionOfobjects.forAll.retract' recursively for the collection. This can cause a domino effect that might be controlled by visualizing the impact of a rollback.

Activity descriptions give references to all the people and resources needed to carry out activities and reflect the current state of the related people and resources. They guide, support, and coordinate work, but do not overly constrain it. Shared activity descriptions are guides to action, but the people are in control, determining whether sub-activities are in work and modifying activity descriptions to adapt to a current situation 'now'.

This is reached by providing a single place to manage the whole range of activities that allow investigating impacts of interaction. Shared activities are created by different systems and by other people, as well as by oneself. Having one place to collect and organize all of one's activities provides a higher-level view for reflection for e.g. planning, prioritizing, and negotiation, to capture, reuse, and evolve best practices in activity patterns 79. Activity patterns correspond to the functional notion of a role, i.e. the bold face arrows chain of activities that represent the behavior of a user 78.

In addition constraint resolvers like the public domain ECLiPSe Constraint Programming System (http://www.eclipse-clp.org/) become applicable that limit the execution by constraints on activities, performers, and all invoked objects or resources.

Activity patterns 79 can be identified and evolved by analyzing the variations of the instances based on systematic observations. This integrates the dynamic informal personalized business activities with the predefined workflow-driven business processes.

The activity model supports informal human-driven activities by providing a unified interaction and presentation of the business activities, adequate and ambient to a user, enabling different systems to interoperate, even semantically, enabling the evolution of business practices, and integrating with formally modeled business processes. Activity descriptions are treated as Meta data, i.e. as glue tying together system resources around the generic implicit operational semantics of activities.

Preferably, encoding activity descriptions are based on as ontology as suggested for processes in the article of Carlos Pedrinaci, John Domingue, Christian Brelage, Tammo van Lessen, Dimka Karastoyanova, Frank Leymann: Semantic Business Process Management: Scaling Up the Management of Business Processes. Second IEEE International Conference on Semantic Computing,546-553.

The Semantic Web is an ideal platform to provide the flexibility, extensibility, and data integration necessary to support the inherent variability and adaptability of business activities. It is suited for developing ontology of unified activity. The core ontology might capture the essential features and structure of the generic idea of collaborative activity, which enables activity-like information from different applications and contexts to be unified, exchanged across systems and organizations, and is able to present a consistent vocabulary to people.

The default abstraction of that ontology is to support flexible and open interactions between people. Some interactions might need more structure, without turning the ontology into another workflow language.

The design guideline for a system according to the invention is to rely on social interaction mechanisms to control activities and to impose only as much constraint as needed, to complement workflows and processes definitions.

A workflow does not need to micro manage people; it can delegate complex social activity, which can help people coordinate their work, collect the relevant materials, pass the results back to the workflow, and produce an audit trail of their work to satisfy compliance requirements like their targets.

A unifying representation might be managed as an RDF-based activity metadata repository that integrates ontology from various sources. This supports people by providing activity contexts for their informal collaborations and by being an intermediary to formal workflow processes.

The activity approach provides a semantic for effectively extending systems with the intelligence, adaptability, and creativity of knowledgeable and experienced workers by leaving the degree of freedom to select their transients.

Sharing and presenting explicit transients with their relationships allows people easily to share a variety of collaborative objects and to aggregate them into activity threads and putting activity metadata over these threads, enabling people to create and evolve activity patterns.

As explained in the description of Fig. 7 developing exploratory clients are suitable to validate activities of users and to study how people behave in order to derive activity patterns.

Because of the canonically induced dependencies that are made explicit activity ontology is a unifying semantic standard that will enable systems at different organizations to interoperate through the exchange of their activity ontology following a vision to leverage semantically rich Web Service descriptions to make activity patterns discoverable.

Consider, for example, an exception condition in a process that requires a renegotiation of interactions, e.g. which happens often when a tactical situation is unclear although an intelligence process has already been performed. All participants can have activity patterns for engaging in such renegotiations. And indeed everyone interacts ad hoc in such a way but usually out of a guiding workflow. E.g. in a critical scenario the focus of reconnaissance might be narrowed on the really critical thing in an among participants agreed time frame. The participants themselves can discover engagement patterns and initiate activities, involving the appropriate people, and including the relevant documents, data, and plans, etc. without any disturbing and limiting workflow.

Using the activities and the relations that are induced among the transient of objects it becomes inferable what the appropriate, i.e. currently relevant objects are. That are the alternatives described by the transient that relate to a current activity.

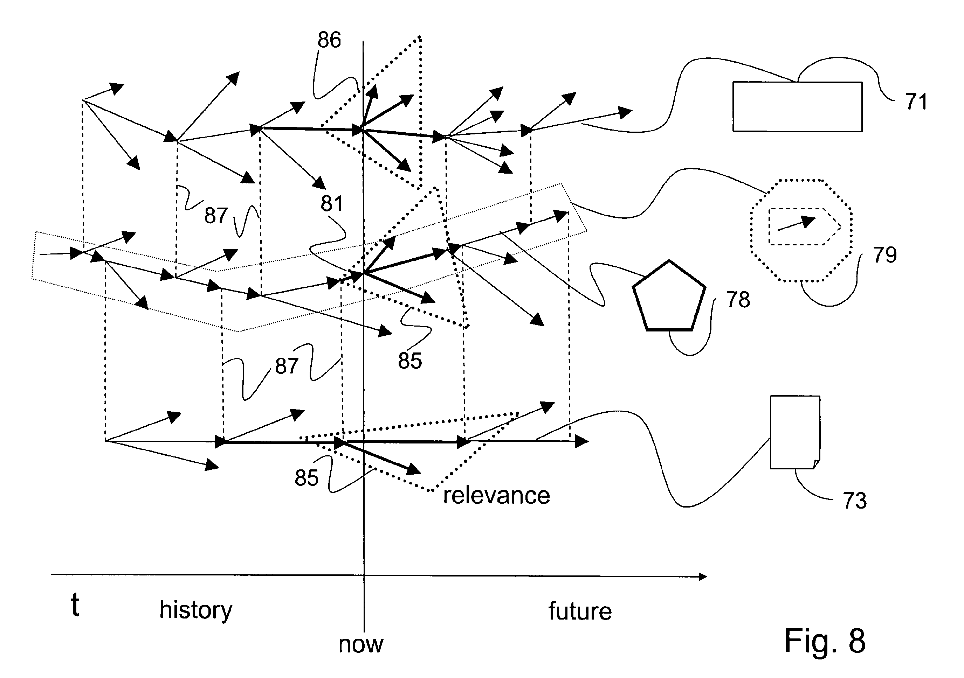

This is shown in Fig. 8 relating to activities of an execution according to the method according to the invention with emphasized relevant objects, dependencies, and extensions. The figure shows transitions of transient Meta model objects as the in the former figures and the relationships 87 between the transients. At a certain time 'now' relevant objects for some activity are the immediate extensions of the transition paths which are shown as bold face arrows. These correspond to the alternatives at that time that are regarded as possible of these objects that are related with the activity in focus 81. Starting from that activity 81 there are related objects 83 and 84 that can be retrieved by following the induced relationships 87. These objects are transient, i.e. the relevant state of that object is the state at the certain time 'now'. And the relevant alternatives 86 of these objects 83 and 84 are the continuation of the transition path of the respective object. The set of relevant objects can be enhanced by investigating a transition in future which either can be made based on activity patterns 82 or on simulation and planning methods for discovering impact of decision for a continuation.

Since this approach for identifying relevant objects is independent from the Meta model it can be realized independently and is reusable for all transient objects to be handled.

Exemplarily this could be done by realizing a component that can handle acyclic graphs with arbitrary relations between the edges and that can infer templates and that allows to traverse such graphs. Alternatively this also could be formulated as a method for collecting adjacent transients e.g. by 'currentActivity.continuations';currentActivity.relatedObject(relationKind) over some relation kinds. This could be enhanced by iterating over the related objects which correspond to a breath first search over the induced relations shown as the vertical dashed lines in the Fig. 8.

For an explicit transition graph there might be some primitives or atoms like an observation of a transient 91 or an interaction 92 that both might generate an activity 93. There might be an activity 93 defining prototype transition 94. Activities 93 might aggregate to transitions 95 by composition, and certain aggregations might serve as a transition pattern 96. The distinction between a workflow-graph is that options of transitions 79 influence dramatically the continuation of a transition path and further selections 97. This is reached by aggregating observed explicit activities in the described graph while execution, dynamically.

A business process can have access to activity descriptions and can monitor the progress of ongoing renegotiations. Further, a rich store of detailed renegotiation activity descriptions can be analyzed for ways to improve the accessing process. Effectively incorporating semantically based support for collaborative business activities qualitatively enhances the adaptability of the semantic of interactions.

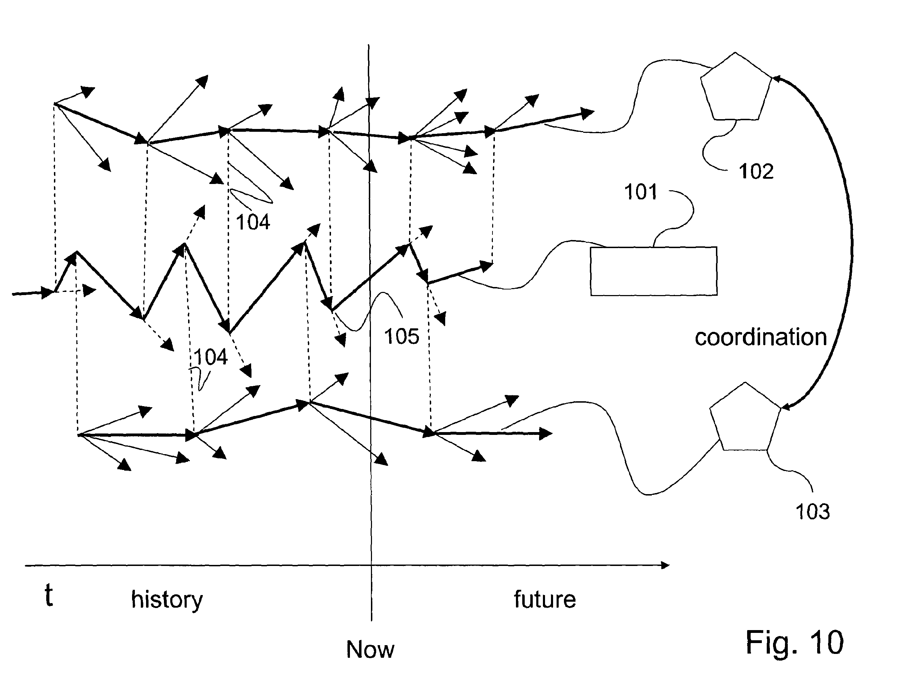

Such a conflict scenario is shown in Fig. 10. The exclusive resource 101 is shared between two persons 102 and 103, each requesting the resource as shown by the induced relation 104. At each invocation point 105 the bold face transition path shows a conflict when the resource is pre-empted to the other of the persons 102 and 103. This is reflected by a pattern of alternating requests shown by the dashed arrows and visualized by the directions of the arrows. In such a scenario coordination is required and can be invoked automatically. This could be for instance a negotiation between the users of a creation of a new resource instance. The important new aspect here is that the unavailability or the scheduling of some resource is not transparent to a user. The user becomes aware of conflicts and is involved in the resolution. And finally this could be realized by a mere workflow - if it is recognized.

Another example concerns workplace collaboration. Workplace collaborators make use of diverse types of documents and other resources. Traditionally, each type of document has been stored in its own repository, and people have had to manage multiple documents or records in multiple storage services even in multiple environments.

Workplace collaborators have usually complex, ad hoc working relations that are partially executed through their shared documents. Traditionally, dependencies among documents and other objects have gone unrecorded, or have been stored in a piecemeal manner inside the documents, or have been objectified and rigidified in workflow engines. Workplace collaborators often need to coordinate with one another, both asynchronously and in real-time, and often in the context of their shared documents. Traditionally, people had no idea of the status of their collaborators, or they have had to consult other, unrelated services for awareness or presence information about their colleagues.

Applying the claimed method changes this scenario. As soon as two collaborators share an object they become aware of each other and of the evolution by the explicit transitions. The system becomes enabled to unify the ways that people collaborate with and through shared documents that can to be described without having storage or an application context.

This enables unified activities by a service that collects shared documents, fine-grained access control, persistent communications, and real-time status information of each object. This serves diverse needs of a workplace of individuals, teams, and communities. Activity exploration enables the harvesting of collective enactments, and their crystallization into work practices templates and rich placeholders for future collaborations.

This kind of collaboration coordination requires adapted presentation and interaction mechanisms. Using a variety of knowledge, visualization, and interaction techniques within the disclosed framework could provide an improved operationally situation awareness because the information is there. Strategic advantages are expected from transparent collaboration scenarios by means of activities. The benefit will be improved operational effectiveness by facilitating the planning process by providing the timelines from the activities. This in turn enables an improved feedback regarding the strategic consequences of activities.

Especially in a reactive context like the military domain the described framework creates a common awareness of the temporal unfolding of events like the displacement of military assets and the ability to anticipate actions of other (sometimes competing) agencies, and serve to the realization of operational objectives. Organizing objectives as activity allows discriminating real operational relevant information.

As described, explicit activity descriptions enable distinguishing relevant information based on the knowledge and information requirements and the behavior of different information consumers that is captured as activity pattern and concretized as interactive roles.

Worries relate to the rate of information dissemination in today's media-intensive environments. The concern here is that the dynamics of the situation picture may result in the differential prioritization of problem-solving goals. When goal switching is mandated by changing operational commitments then different subsets of information will need to be dynamically integrated or aggregated to support changing situation awareness concerns.

These challenges to situation awareness at least for the military contexts can be addressed by a combination of activities and advanced modes of information visualization and user interaction where the visualization is disclosed elsewhere. In such a system ad hoc activities become even tradable and measurable in terms of effort, e.g. value of related objects and elapsed time.

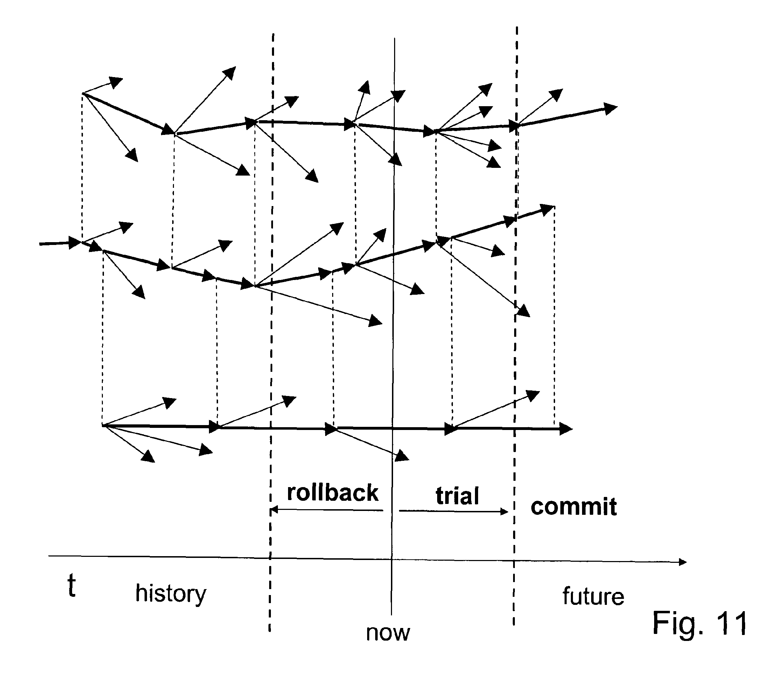

In case of the incorporation of several activities or resources explicit transitions as shown in Fig. 11 can be used to try out an option and if the common result is acceptable one might commit the made choice and perform the transaction. If in the meantime something has changed there might be a derivation form this common result, but then a user might rollback the made choices and restore the effects. This is possible by propagating the rollback recursively. In a new approach a user might then chose another activity. Preferably a trail does not reserve resources as it is done usually using a two phase commit protocol or by non pre-emptive scheduling. It is intended to point out and make collaborating investigable by providing rationales in conflicting cases.

It is noted that Semantic Web and the ressource description framework (RDF) especially can represent data in a distributed way across a network like the Web. As such, it forms the basis of a web of data in which anyone can say anything about any topic, especially about activities. This allows describing and defining distributed data as claimed in such a way, that the data can be brought back together in a useful and meaningful way. To put the Semantic Web to work, it is necessary to describe a high level structure of an application architecture - in particular, the components that comprise it, the kinds of inputs it gets (and from where), how it takes advantage of RDF.

Many of the components of a Semantic Web application are available that can be classified as follows:
- An RDF parser that reads text in one (or more) of these formats and interprets it as triples in the RDF data model.
- An RDF serializer does the reverse; it takes a set of triples and creates a file that expresses that content in Software one of the serialization forms.
- RDF distributes data in the form of triples. An RDF store is a database that is tuned for storing and retrieving data in the form of triples. In addition to the familiar functions of any database, an RDF store has the additional ability to merge information from multiple data sources, as defined by the RDF Standard.
- Closely related to the RDF store is the RDF Query engine. The query engine provides the capability to retrieve information from an RDF store according to structured queries.
- An application has some work that it performs with the data it processes: analysis, user interaction, archiving, and so forth. These capabilities are accomplished using some programming language that accesses the RDF store via queries.
- Scrapers translate a source of data by translating their input a file in some RDF representation.

An RDF application includes the RDF parser and serializer, scrapers and converters, the RDF merge functionality, and the RDF query engine. These capabilities interact with the application itself and the RDF store making an environment descriptive.

Once all the required data sources of the environments have been scraped, converted, or parsed, the application uses the merge functionality of the RDF store to produce a single, federated graph of all the merged data. This federated graph is preferably used for all further queries and methods. There is no need for the queries themselves to be aware of the federation strategy or schedule; the federation has already taken place when the RDF merge was performed.

In contrast to information systems according to prior art where information products are organized mainly along traditional static relations or hierarchies the technic allows to integrate parts of information products which might be independently available but which are interlinked by an activity context.

Using ontologies as semantic data models can rationalize disparate data sources into one body of information. By creating ontologies for data and content sources and adding generic domain information, integration of disparate sources in the enterprise can be performed without disturbing existing applications. The ontology is mapped to the data sources (fields, records, files, documents), giving applications direct access to the data through the ontology.

## Claims

1. A method for coordinating interaction in a set of distributed fluctuating environments, where an environment comprises objects and resources, the method comprising capturing interactions, evaluating captured interactions inside an environment and controlling said objects and resources inside the environment, and exchange information about the objects and resources, **characterized in that** activity descriptions are derived from the interactions that describe transitions of an environment, the activity descriptions are exchanged between the environments, and coordinating the environments by synchronizing objects and resources that are related to activities as a cooperative environment.

2. The method according to claim 1 **characterized in that** the activity descriptions comprises an environment description.

3. The method according to one of the previous claims **characterized in that** activity descriptions are generated while execution.

4. The method according to one of the previous claims **characterized in that** activities descriptions are analyzed to identify activity templates by matching or unifying the activities.

5. The method according to one of the previous claims **characterized in that** activity descriptions are used to explore reactive behavior of the environment by simulation of invoked resources or objects.

6. The method according to one of the previous claims **characterized in that** activity descriptions are used to rollback actions and restore invoked parts of environments.

7. The method according to one of the previous claims **characterized in that** activity descriptions are used to agile plan activities by exploration of impacts.

8. The method according to one of the previous claims **characterized in that** transitions of objects and resources are stimulated.

9. The method according to one of the previous claims **characterized in that** activity descriptions are used to discriminate relevant objects.

10. The method according to one of the previous claims **characterized in that** activity descriptions are presented uniformly in the environments.

11. The method according to one of the previous claims **characterized in that** the relevance of an object or a resource with respect to an activity is determined by induced relations between the activity and the object or the resource.

12. The method according to one of the previous claims **characterized in that** activity descriptions are used to control the establishment of inter-communication.

13. The method according to one of the previous claims **characterized in that** activity descriptions are used to define a common view of inter-communication objects.

14. A system suitable for operating inside set of distributed fluctuating environments, the system comprising a computer software product for coordinating the environments, the system and the environments comprise objects and resources, and the computer software product comprising capture means for capturing interaction and evaluation means for evaluating an interaction and controlling a part of said objects and resources, and the system comprises communication means for exchanging information between the system and the environments, **characterized in that** the computer software product comprising programming means for capturing activity descriptions that describe transitions of objects and resources, exchanging the activity descriptions with the environments, and coordinating environments by synchronizing objects and resources that are related to same activities.
